# EUROPEAN PATENT SPECIFICATION

(11) **EP 4 556 259 B1**
(45) Date of publication and mention of the grant of the patent: **07.10.2026**
(21) Application number: 24207435.9
(22) Date of filing: 18.10.2024
(51) Int. Cl.: B60C 11/03, B60C 11/12, B60C 11/13

(54) **TIRE**
REIFEN
PNEUMATIQUE

(30) Priority: 14.11.2023 JP 2023193902
(43) Date of publication of application: 21.05.2025
(73) Proprietor: SUMITOMO RUBBER INDUSTRIES, LTD., Kobe-shi, Hyogo 651-0072 (JP)
(72) Inventor: ARAI, MAHITO, KOBE-SHI, 651-0072 (JP); NISHIMURA, YOSHIKI, KOBE-SHI, 651-0072 (JP)
(74) Representative: Plasseraud IP

(56) References cited:
- EP-A1- 1 872 975
- EP-A1- 4 484 179
- EP-A2- 1 935 671
- DE-A1- 102022 117 024
- JP-A- H0 848 115

## Description

### BACKGROUND OF THE INVENTION

### Field of the Invention

The present invention relates to a tire.

### Background Art

Japanese Laid-Open Patent Publication No. 2019-156025 proposes a tire including a tread portion that is provided with a plurality of inclined grooves extending from tread ends to a portion around a tire equator and a plurality of inclined land portions demarcated by the inclined grooves. In addition, a plurality of sipes are provided on the inclined land portions.

In the tire as in Japanese Laid-Open Patent Publication No. 2019-156025, since the plurality of inclined grooves are provided, drainage performance in a tread width direction can be expected to a certain degree, but drainage performance in a tire circumferential direction tends to decrease. Therefore, there is room for further improving braking performance on a wet road surface (wet braking performance).

DE 10 2022 117024 A1 discloses a tire directional tread with axially inclined block arrangements being crossed by circumferential sipes being widened at a radially inside portion and the block edges presenting recesses targeting a balance between an improved wet performance and a reduced rolling resistance.

Attention is also drawn to the disclosure of the publications JP H08 48115 A, EP 1 872 975 A1 and EP 1 935 671 A2 and also to the late-published Art. 54(3) document EP 4 484 179 A1.

The present invention has been made in view of the above circumstances, and a main object of the present invention is to provide a tire capable of improving wet braking performance while maintaining drainage performance in a tread width direction.

### SUMMARY OF THE INVENTION

The present invention is directed to a tire that includes a tread portion having a designated rotation direction, wherein the tread portion includes a first tread end, a plurality of first inclined grooves extending at least from the first tread end to a portion around a tire equator so as to be inclined toward a leading edge side in the rotation direction, and a plurality of first land portions demarcated by the plurality of first inclined grooves, at least one through sipe is provided on at least one of the plurality of first land portions so as to penetrate the first land portion in a tire circumferential direction, and the through sipe includes a sipe body extending inward in a tire radial direction from a tread surface of the first land portion and a widened portion connected to an inner side in the tire radial direction of the sipe body and having a greater width than the sipe body. The tread portion further includes the second tread end, and the plurality of second inclined grooves extending at least from the second tread end to the portion around the tire equator so as to be inclined toward the leading edge side in the rotation direction, the first inclined grooves communicate with the second inclined grooves,
each first land portion has a first corner projecting toward one side in the tire circumferential direction at a portion where the first inclined groove is connected to the second inclined groove,
the first corner has a chamfered portion including an inclined surface inclined relative to a line normal to the tire, and
the first corner projects toward the leading edge side in the rotation direction.

As a result of adopting the above-described configuration, the tire according to the present invention can have improved wet braking performance while maintaining drainage performance in a tread width direction.
The tire may be as recited in one of the dependent claims.

### BRIEF DESCRIPTION OF THE DRAWINGS

FIG. 1 is a development view of a tread portion of a tire according to one embodiment of the present invention;
FIG. 2 is an enlarged view of a first land portion and first inclined grooves in FIG. 1;
FIG. 3 is a cross-sectional view taken along a line A-A in FIG. 2;
FIG. 4 is an enlarged view of the first land portion in FIG. 1;
FIG. 5 is a cross-sectional view taken along a line B-B in FIG. 4;
FIG. 6 is a cross-sectional view taken along a line C-C in FIG. 4;
FIG. 7 is a cross-sectional view taken along a line D-D in FIG. 4;
FIG. 8 is a development view of a tread portion of a tire according to another embodiment of the present invention;
FIG. 9 is a development view of a tread portion of a tire according to another embodiment of the present invention;
FIG. 10 is an enlarged sectional view of a chamfered portion in FIG. 9; and
FIG. 11 is a development view of a tread portion of a tire according to another embodiment of the present invention.

### DETAILED DESCRIPTION

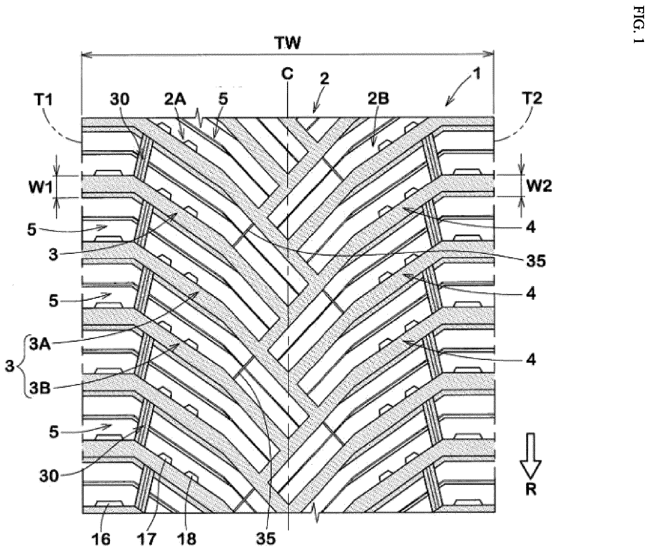

Hereinafter, embodiments of the present invention will be described with reference to the drawings. The drawings are depicted so as to include the features of the present invention, but may contain exaggerated expressions and expressions that differ from the dimensional ratio of the actual structure in order to help the understanding of the present invention. In addition, the same or common elements are denoted by the same reference characters throughout each embodiment, and the redundant description thereof is omitted. FIG. 1 is a development view of a tread portion 2 of a tire (hereinafter, may be simply referred to as "tire") 1 of the present embodiment. As shown in FIG. 1, the tire 1 of the present embodiment is a tire for a passenger car, and is an all-season tire designed for running on a snow road in addition to running on a dry road surface. However, the tire 1 of the present invention is not limited to such a mode, and may be, for example, a heavy duty tire.

The tire 1 of the present invention includes the tread portion 2 having a designated rotation direction R. The rotation direction R is indicated, for example, on a sidewall portion (now shown) by characters or marks.

The tread portion 2 of the tire 1 of the present embodiment includes a first tread end T1 and a second tread end T2. In each drawing of the present specification, a tread end on the left side of a tire equator C is defined as the first tread end T1, and a tread end on the right side of the tire equator C is defined as the second tread end T2. The tread portion 2 includes a first tread portion 2A on the first tread end T1 side with respect to the tire equator C and a second tread portion 2B on the second tread end T2 side with respect to the tire equator C. The first tread portion 2A and the second tread portion 2B are substantially line-symmetric with respect to the tire equator C except that the first tread portion 2A and the second tread portion 2B are displaced in the tire circumferential direction. Thus, each configuration of the first tread portion 2A can be applied to the second tread portion 2B.

The first tread end T1 and the second tread end T2 are outermost ground-contact positions in the tire axial direction when 70% of a standardized load is applied to the tire 1 in a standardized state and the tire 1 is brought into contact with a flat surface at a camber angle of 0°.

In the case of a pneumatic tire for which various standards are defined, the "standardized state" is a state where the tire is fitted on a standardized rim and inflated to a standardized internal pressure and no load is applied to the tire. In the case of a non-pneumatic tire or a tire for which various standards are not defined, the standardized state means a standard use state, corresponding to the purpose of use of the tire, where no load is applied to the tire. In the present specification, unless otherwise specified, dimensions and the like of components of the tire are values measured in the standardized state. In the present specification, unless otherwise specified, a known method can be used as appropriate as a method for measuring the above dimensions.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

In the case of a pneumatic tire for which various standards are defined, the "standardized load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In the case of a tire for which various standards are not defined, the "standardized load" refers to the maximum load applicable when the tire is used, according to the above-described standards.

The tread portion 2 includes a plurality of first inclined grooves 3 and a plurality of second inclined grooves 4. In FIG. 1, these grooves and longitudinal through grooves 30 described below are dotted. Each first inclined groove 3 extends at least from the first tread end T1 toward the tire equator C so as to be inclined toward a leading edge side in the rotation direction R. Each second inclined groove 4 extends at least from the second tread end T2 toward the tire equator C so as to be inclined toward the leading edge side in the rotation direction R. The second inclined groove 4 has substantially the same configuration as the first inclined groove 3, and the configuration of the first inclined groove 3 can be applied to the second inclined groove 4.

From the viewpoint of ensuring wet performance, a groove width W1 of the first inclined groove 3 and a groove width W2 of the second inclined groove 4 are, for example, not less than 3 mm, preferably 4.0 to 7.0 mm, and more preferably 4.5 to 6.0 mm. In addition, the depths of these inclined grooves are, for example, 4.0 to 8.5 mm and preferably 5.0 to 8.0 mm.

Each first inclined groove 3 of the present embodiment extends from a position (not shown in FIG. 1) on the outer side in the tire axial direction with respect to the first tread end T1. In addition, the first inclined groove 3 crosses the center position in the tire axial direction between the first tread end T1 and the tire equator C and extends to the vicinity of the tire equator C. This configuration means that a distance in the tire axial direction from an inner end on the tire equator C side of each first inclined groove 3 to the tire equator C is not greater than 15% of a tread width TW. In a preferable mode, the distance from the inner end of the first inclined groove 3 to the tire equator C is not greater than 10% of the tread width TW. The tread width TW corresponds to a distance in the tire axial direction from the first tread end T1 to the second tread end T2 in the standardized state.

The first inclined grooves 3 of the present embodiment include, for example, transverse first inclined grooves 3A extending to a position located beyond the tire equator C, and non-transverse first inclined grooves 3B terminating without crossing the tire equator C. In the present embodiment, the transverse first inclined grooves 3A and the non-transverse first inclined grooves 3B are provided alternately in the tire circumferential direction. However, the present invention is not limited to such a mode.

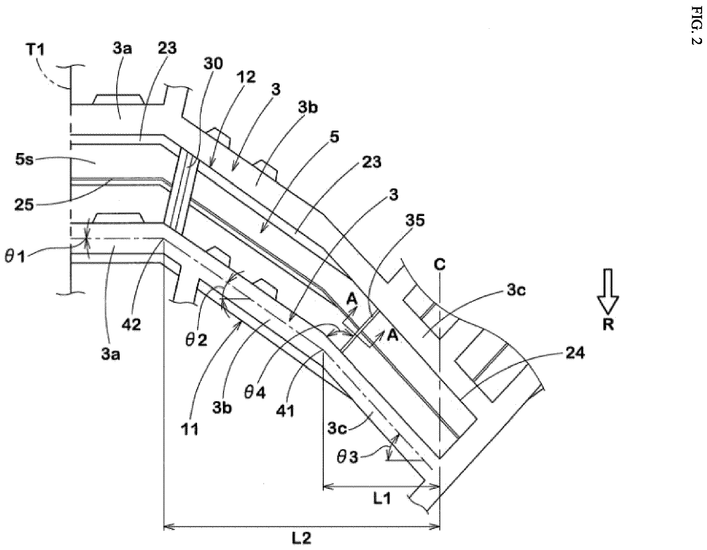

The tread portion 2 of the present invention includes a plurality of first land portions 5 demarcated by the plurality of first inclined grooves 3. FIG. 2 is an enlarged view of two first inclined grooves 3 and one first land portion 5. As shown in FIG. 1 and FIG. 2, at least one through sipe 35 is provided on at least one of the plurality of first land portions 5 so as to penetrate the first land portion 5 in the tire circumferential direction. Here, "penetrate in the tire circumferential direction" means that the through sipe 35 communicates with both the two first inclined grooves 3 between which the first land portion 5 is interposed. Thus, the through sipe 35 may be inclined relative to the tire circumferential direction.

In the present specification, the "sipe" refers to a recess having a longitudinal direction and including a region in which two inner walls contact with each other in a state where the standardized load is applied to a ground-contact surface. The sipe width (an interval between the two inner walls in the standardized state) in the region is, for example, less than 1.5 mm and preferably 0.4 to 1.2 mm. The sipe may partly include a region in which the two inner walls do not contact with each other in the state where the standardized load is applied thereto. Thus, the sipe may include a widened portion or a chamfered portion described below.

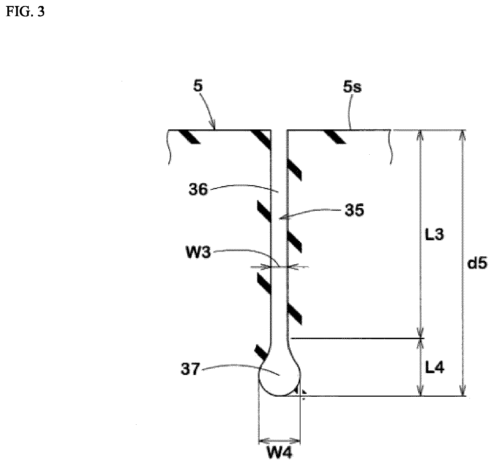

FIG. 3 is a cross-sectional view taken along a line A-A in FIG. 2. As shown in FIG. 3, the through sipe 35 includes a sipe body 36 extending inward in the tire radial direction from a tread surface 5s of the first land portion 5, and a widened portion 37 connected to the inner side in the tire radial direction of the sipe body 36 and having a greater width than the sipe body 36. As a result of adopting the above-described configuration, the tire 1 of the present invention can have improved wet braking performance while maintaining drainage performance in a tread width direction. The reason for this is as follows.

Since the tire 1 of the present invention includes the plurality of first inclined grooves 3 as shown in FIG. 1, excellent drainage performance can be exhibited in the tread width direction. In addition, the through sipe 35 including the widened portion 37 as shown in FIG. 3 can improve drainage performance in the tire circumferential direction and thus can improve wet braking performance while maintaining the stiffness of the tread portion 2 (shown in FIG. 1). Furthermore, the through sipe 35 including the widened portion 37 can maintain water absorptive performance even if the tread portion 2 is worn to some extent, and can exhibit excellent wet braking performance until the widened portion 37 appears at the ground-contact surface.

Hereinafter, more detailed configurations of the present embodiment will be described. The configurations described below show a specific mode of the present embodiment. Therefore, it is needless to say that the present invention can achieve the above-described effect even when the configurations described below are not provided. In addition, even when any one of the configurations described below is independently applied to the tire 1 of the present invention having the above-described characteristics, performance improvement corresponding to each configuration can be expected. Furthermore, when some of the configurations described below are applied in combination, complex performance improvement corresponding to each configuration can be expected.

As shown in FIG. 1, the inner ends on the tire equator C side of the first inclined grooves 3 communicate with the second inclined grooves 4. In a preferable mode, a pair of the transverse first inclined groove 3A and the non-transverse first inclined groove 3B adjacent to each other in the tire circumferential direction communicate with the same second inclined groove 4. The second inclined grooves 4 communicate with the first inclined grooves 3 in the same manner. Accordingly, drainage performance in the vicinity of the tire equator C is improved and excellent wet braking performance is exhibited.

As shown in FIG. 2, each first inclined groove 3 includes an inner groove portion 3c on the tire equator C side, an outer groove portion 3a on the first tread end T1 side, and a center groove portion 3b connected to the inner groove portion 3c and the outer groove portion 3a. The inner groove portion 3c, the outer groove portion 3a, and the center groove portion 3b linearly extend, and angles thereof relative to the tire circumferential direction are different from each other. In a preferable mode, the angle of the first inclined groove 3 relative to the tire axial direction is increased toward the tire equator C side. Such a first inclined groove 3 provides frictional force in multiple directions and can further enhance wet performance.

The outer groove portion 3a extends inward in the tire axial direction at least from the first tread end T1. An angle θ1 of the outer groove portion 3a relative to the tire axial direction is, for example, not greater than 10°. The outer groove portion 3a of the present embodiment extends so as to be parallel to the tire axial direction.

An angle θ2 of the center groove portion 3b relative to the tire axial direction is greater than the angle θ1 of the outer groove portion 3a relative to the tire axial direction. The angle θ2 of the center groove portion 3b is, for example, 25 to 35°. An angle θ3 of the inner groove portion 3c relative to the tire axial direction is greater than the angle θ2 of the center groove portion 3b relative to the tire axial direction. The angle θ3 of the inner groove portion 3c is, for example, 40 to 50°. Such a first inclined groove 3 including the outer groove portion 3a, the center groove portion 3b, and the inner groove portion 3c can exhibit excellent drainage performance in the tread width direction.

As shown in FIG. 2, a distance L1 in the tire axial direction from the tire equator C to a junction 41 of the inner groove portion 3c and the center groove portion 3b is 10% to 25% of the tread width TW (shown in FIG. 1). The junction 41 refers to a position where an angle of the line tangent to the groove center line of the first inclined groove 3 indicates an intermediate value between an angle of the inner groove portion 3c and an angle of the center groove portion 3b.

A distance L2 in the tire axial direction from the tire equator C to a junction 42 of the center groove portion 3b and the outer groove portion 3a is 30% to 45% of the tread width TW (shown in FIG. 1). The junction 42 refers to a position where an angle of the line tangent to the groove center line of the first inclined groove 3 indicates an intermediate value between the angle of the center groove portion 3b and an angle of the outer groove portion 3a. With such arrangement of the groove portions, wet performance and wear resistance are improved in a well-balanced manner.

As shown in FIG. 1, in the present embodiment, the first land portions 5 provided with the through sipes 35 and the first land portions 5 provided with no through sipe 35 are alternately arranged in the tire circumferential direction. However, the present invention is not limited to such a mode, and the through sipe 35 may be provided on each first land portion 5.

As shown in FIG. 2, each through sipe 35 is disposed on the tire equator C side with respect to the center position between the first tread end T1 and the tire equator C in the tire axial direction, for example. In a preferable mode, at least one end of the through sipe 35 communicates with the inner groove portion 3c of the first inclined groove 3. In a more preferable mode, both ends of the through sipe 35 communicate with the inner groove portions 3c. In addition, the through sipe 35 is not disposed on the tire equator C. Accordingly, a distance between the through sipe 35 and the tire equator C is appropriate, so that wet performance and wear resistance are improved in a well-balanced manner.

The through sipe 35 linearly extends in a tread plan view. In addition, the through sipe 35 is, for example, disposed so as to be inclined at an angle of 30 to 50° relative to the tire circumferential direction. Accordingly, an angle θ4 between the through sipe 35 and the first inclined groove 3 communicating with the leading edge side in the rotation direction R of the through sipe 35 is 75 to 105°. Such a through sipe 35 provides frictional force in the tire axial direction and the tire circumferential direction in a well-balanced manner.

As shown in FIG. 1, an end portion on the tire equator C side of each through sipe 35 is located so as to face an inner end on the tire equator C side of each second inclined groove 4. Specifically, in a tread plan view, the end portion of the through sipe 35 overlaps with a region obtained by virtually extending the second inclined groove 4 in a length direction thereof. In a more preferable mode, in the present embodiment, the entire through sipe 35 overlaps with the virtually extended region in a tread plan view. Accordingly, the second inclined groove 4 and the through sipe 35 can cooperate to enhance drainage performance, so that wet braking performance is further improved.

As shown in FIG. 3, the sipe body 36 of the through sipe 35 linearly extends from the tread surface 5s of the first land portion 5 without a chamfered portion or the like therebetween so as to be parallel to the tire radial direction. A total depth d5 of the through sipe 35 is 60% to 95% of the maximum depth of the first inclined groove 3. A length L3 in the tire radial direction of the sipe body 36 is 50% to 80% of the maximum depth of the first inclined groove 3. In addition, a width W3 of the sipe body 36 is 0.4 to 0.8 mm. Such a sipe body 36 can enhance wet braking performance while maintaining the stiffness of the first land portion 5.

The widened portion 37 forms a bottom portion of the through sipe 35. In addition, the widened portion 37 has a substantially semicircular contour on the inner side with respect to a portion communicating with the sipe body 36. In addition, the widened portion 37 extends in a longitudinal direction of the through sipe 35 while maintaining the contour. A length L4 in the tire radial direction of the widened portion 37 is 10% to 25% of the maximum depth of the first inclined groove 3. A maximum width W4 of the widened portion 37 is 2.5 to 4.0 times the width W3 of the sipe body 36. Such a widened portion 37 can enhance wet braking performance while suppressing vulcanization molding defects.

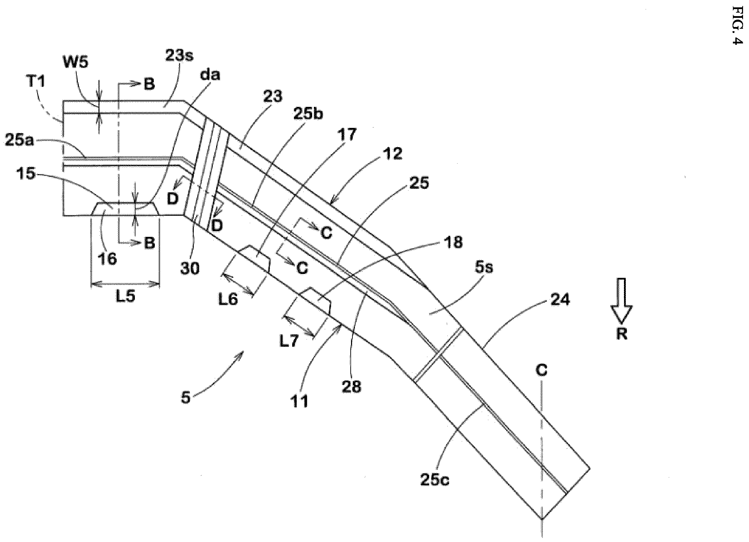

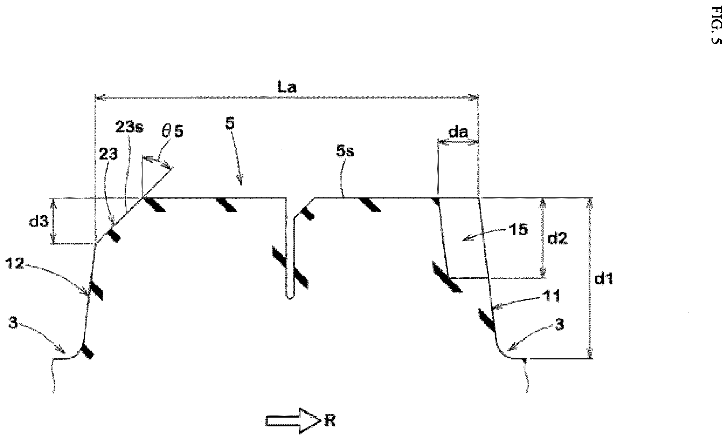

FIG. 4 is an enlarged view of the first land portion 5. FIG. 5 is a cross-sectional view taken along a line B-B in FIG. 4. As shown in FIG. 4 and FIG. 5, each first land portion 5 includes the tread surface 5s, a first side wall 11 on the leading edge side in the rotation direction R, and a second side wall 12 on a trailing edge side in the rotation direction R.

At least one of the plurality of first land portions 5 is provided with at least one recess 15 formed by locally recessing the first side wall 11. The recess 15 is open at the tread surface 5s. With such a recess 15, a hard snow column can be formed when the first land portion 5 is brought into contact with the ground. In addition, excellent snow traction is exhibited when the snow column is sheared.

As shown in FIG. 5, in a plan view of the first land portion 5, a maximum recessed amount da of the recess 15 in a direction orthogonal to a longitudinal direction of the first inclined groove 3 is preferably 80% to 150% of the width W4 (shown in FIG. 3) of the widened portion 37 of the through sipe 35. In addition, the maximum recessed amount da is, for example, 1.0 to 2.5 mm and preferably 1.5 to 2.0 mm. Accordingly, wear progresses evenly in a portion around the recess 15 and a portion around the through sipe 35, so that uneven wear resistance is improved.

As shown in FIG. 4, the first land portion 5 is preferably provided with a plurality of the recesses 15. In the present embodiment, the maximum recessed amount da of each of the plurality of recesses 15 provided in the one first land portion 5 is set so as to be in the above-described range. Accordingly, the above-described effect can be assuredly exhibited.

In the present embodiment, the plurality of recesses 15 provided in one first land portion 5 include a first recess 16, a second recess 17, and a third recess 18. The first recess 16 is provided closest to the first tread end T1 side among the plurality of recesses 15, and is in contact with the outer groove portion 3a (shown in FIG. 2) of the first inclined groove 3 in the present embodiment. The second recess 17 is located on the tire equator C side with respect to the first recess 16. The third recess 18 is located on the tire equator C side with respect to the second recess 17. The second recess 17 and the third recess 18 are in contact with the center groove portion 3b (shown in FIG. 2) of the first inclined groove 3.

The first recess 16 is preferably away from the first tread end T1 and a longitudinal through groove 30 described below by 5.0 mm or more, for example. The second recess 17 is preferably away from the longitudinal through groove 30 by 5.0 mm or more. The third recess 18 is preferably away from the second recess 17 by 5.0 mm or more. Accordingly, uneven wear of the first land portion 5 is suppressed.

The maximum length in the longitudinal direction of the recess 15 provided closest to the first tread end T1 (in the present embodiment, the first recess 16) among the plurality of recesses 15 provided on one first land portion 5 is larger than the maximum length in the longitudinal direction of the other recess 15 (in the present embodiment, the second recess 17 and the third recess 18). Specifically, a maximum length L5 of the first recess 16 is 150% to 250% of a maximum length L6 of the second recess 17. The maximum length L6 of the second recess 17 is 80% to 120% of a maximum length L7 of the third recess 18, and in the present embodiment, these lengths are equal to each other. Such a plurality of the recesses 15 serve to enhance steering stability and on-snow performance in a well-balanced manner.

The maximum length L5 of the first recess 16 is, for example, 3.0 to 12.0 mm and preferably 5.0 to 10.0 mm. The maximum length L6 of the second recess 17 and the maximum length L7 of the third recess 18 are, for example, 3.0 to 8.0 mm and preferably 4.0 to 7.0 mm.

The opening shape of the recess 15 in the tread surface 5s of the first land portion 5 is, for example, trapezoidal. However, the present invention is not limited to such a shape, and the opening shape may be triangular or semicircular.

From the same viewpoint, as shown in FIG. 5, a maximum depth d2 of the recess 15 from the tread surface 5s is 50% to 80% of a maximum depth d1 of the first inclined groove 3.

The first land portion 5 includes a chamfered portion 23 formed at least partially between the second side wall 12 and the tread surface 5s. The chamfered portion 23 is formed as a minute inclined surface 23s disposed such that a ridge angle formed by the second side wall 12 and the tread surface 5s is eliminated. In the present embodiment, since such a chamfered portion 23 is formed on the second side wall 12 side, strain of the tread surface during braking on a dry road surface is suppressed, and a substantial ground-contact area is increased, so that braking performance on a dry road surface is improved.

An angle θ5 of the inclined surface 23s of the chamfered portion 23 relative to a line normal to the tire is, for example, 30 to 60° and preferably 40 to 50°. A width W5 (shown in FIG. 4) of the inclined surface 23s in the plan view of the first land portion 5 is, for example, 0.5 to 2.0 mm and preferably 1.0 to 1.5 mm. A depth d3 of the inclined surface 23s is, for example, 0.5 to 2.5 mm and preferably 1.0 to 2.0 mm.

As shown in FIG. 2, in the present embodiment, the above-described chamfered portion 23 is formed in portions, of the first land portion 5, which are in contact with the outer groove portion 3a and the center groove portion 3b of the first inclined groove 3. Accordingly, the chamfered portion 23 is disposed in a region where the ground-contact pressure increases during braking, so that the above-described effect is assuredly achieved.

In a plan view of the first land portion 5, the area of the chamfered portion 23 is 10% to 15% of the area of the tread surface 5s of one first land portion 5. Accordingly, steering stability and on-snow performance are improved in a well-balanced manner.

The second side wall 12 includes a non-chamfered portion 24 connected to the tread surface 5s without the chamfered portion 23 therebetween. The non-chamfered portion 24 is disposed in a portion, of the second side wall 12, in contact with the inner groove portion 3c. Accordingly, since the non-chamfered portion 24 is disposed in a region close to the tire equator C, a high edge effect can be expected. Thus, excellent snow traction can be expected.

As shown in FIG. 4, at least one inclined sipe 25 is provided on the first land portion 5 so as to extend along the longitudinal direction of the first inclined groove 3 (shown in FIG. 2). In the present embodiment, one inclined sipe 25 is provided on one first land portion 5.

The inclined sipe 25 extends along the first inclined groove 3 (shown in FIG. 2) from the first tread end T1 to an end portion on the tire equator C side of the first land portion 5. In a preferable mode, the inclined sipe 25 is provided in a central region among three equal regions into which the first land portion 5 is divided in the direction orthogonal to the longitudinal direction of the first inclined groove 3 by two virtual lines extending along the longitudinal direction of the first inclined groove 3. Such an inclined sipe 25 can enhance wet performance while suppressing uneven wear of the first land portion 5.

The inclined sipe 25 includes an outer sipe portion 25a, a central sipe portion 25b, and an inner sipe portion 25c. The outer sipe portion 25a linearly extends inward in the tire axial direction at least from the first tread end T1. The outer sipe portion 25a of the present embodiment extends along the outer groove portion 3a (shown in FIG. 2) of the first inclined groove 3, and in a preferable mode, these portions are parallel to each other. In addition, the length of the outer sipe portion 25a is 80% to 120% of the length of the outer groove portion 3a.

The central sipe portion 25b is connected to the inner side in the tire axial direction of the outer sipe portion 25a and linearly extends. The central sipe portion 25b extends along the center groove portion 3b (shown in FIG. 2) of the first inclined groove 3, and in a preferable mode, these portions are parallel to each other. In addition, the length of the central sipe portion 25b is 80% to 120% of the length of the center groove portion 3b.

The inner sipe portion 25c is connected to the inner side in the tire axial direction of the central sipe portion 25b and linearly extends. The inner sipe portion 25c extends along the inner groove portion 3c (shown in FIG. 2) of the first inclined groove 3, and in a preferable mode, these portions are parallel to each other. In addition, the length of the inner sipe portion 25c is 80% to 120% of the length of the inner groove portion 3c. Such an inclined sipe 25 including the outer sipe portion 25a, the central sipe portion 25b, and the inner sipe portion 25c can assuredly suppress uneven wear of the first land portion 5.

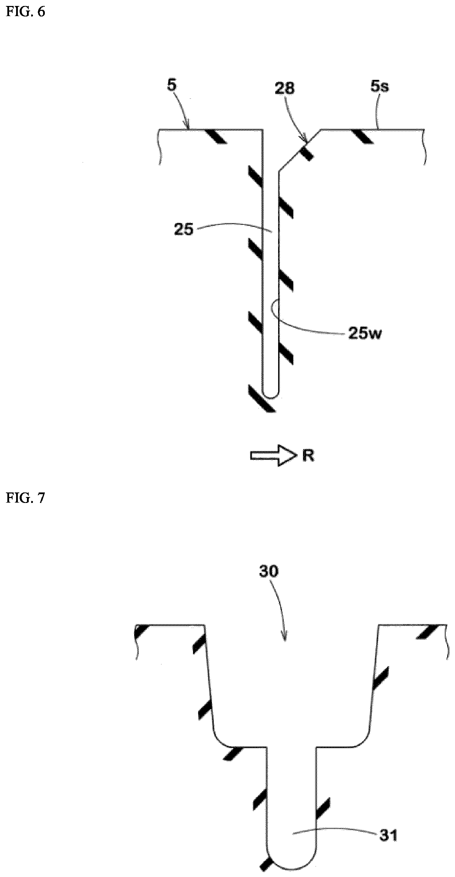

FIG. 6 is a cross-sectional view taken along a line C-C in FIG. 4. As shown in FIG. 6, the inclined sipe 25 has a chamfered portion 28 provided at an edge thereof on the leading edge side in the rotation direction R. The chamfered portion 28 is formed as a minute inclined surface disposed such that a ridge angle formed by a sipe wall 25w and the tread surface 5s of the first land portion 5 is eliminated. An angle of this inclined surface relative to a line normal to the tire is, for example, 40 to 50°. Such a chamfered portion 28 can enhance braking performance on a dry road surface.

In a preferable mode, the inclined sipe 25 has no chamfered portion at an edge thereof on the trailing edge side in the rotation direction R. Accordingly, the edge on the trailing edge side of the inclined sipe 25 can exert a large frictional force during running on snow, so that snow traction is improved.

As shown in FIG. 4, the above-described chamfered portion 28 is provided at the outer sipe portion 25a and the central sipe portion 25b. On the other hand, no chamfered portion is provided at the edges on both sides of the inner sipe portion 25c. Accordingly, steering stability on a dry road surface and snow traction are improved in a well-balanced manner.

As shown in FIG. 2, at least one longitudinal through groove 30 is provided on the first land portion 5 of the present embodiment so as to connect the two first inclined grooves 3 adjacent to each other in the tire circumferential direction. In the present embodiment, one longitudinal through groove 30 is provided on one first land portion 5. The longitudinal through groove 30 of the present embodiment connects the center groove portions 3b of the first inclined grooves 3 adjacent to each other in the tire circumferential direction. The positions at which the longitudinal through groove 30 communicates with the center groove portions 3b are on the first tread end T1 side with respect to the center positions in the longitudinal direction of the center groove portions 3b. Such a longitudinal through groove 30 makes it easier for a portion therearound to deform moderately, and can inhibit snow from clogging the first inclined groove 3. Accordingly, excellent on-snow performance is continuously exhibited.

The longitudinal through groove 30 is inclined in a direction opposite to that of the center groove portion 3b with respect to the tire axial direction. An angle of the longitudinal through groove 30 relative to the tire circumferential direction is, for example, 5 to 15°. Such a longitudinal through groove 30 can exert a large snow column shearing force in the tire axial direction during running on snow.

FIG. 7 is a cross-sectional view taken along a line D-D in FIG. 4. As shown in FIG. 7, the longitudinal through groove 30 has a bottom surface with an opening in which a groove bottom narrow groove 31 extending in the tire radial direction is formed. Such a groove bottom narrow groove 31 serves to further improve wet performance.

As shown in FIG. 1, the land ratio of the tread portion 2 of the present embodiment is, for example, 50% to 65% and preferably 55% to 60%. Accordingly, steering stability and snow traction are improved in a well-balanced manner. In the present specification, "land ratio" corresponds to the ratio of an actual ground-contact area to a ground-contact area in a state where all the grooves and the sipes of the tread portion 2 are filled.

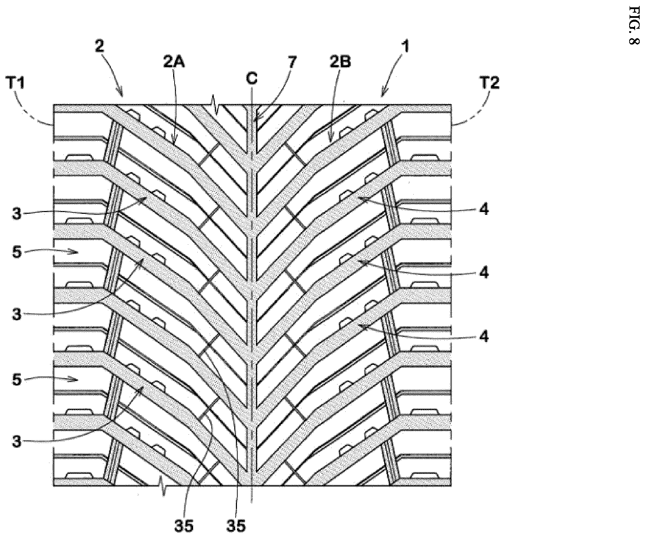

FIG. 8 is a development view of a tread portion 2 of a tire 1 according to another embodiment of the present invention. As shown in FIG. 8, in this embodiment, one crown circumferential groove 7 continuously and linearly extending in the tire circumferential direction is provided on the tire equator C. In addition, each of the first inclined grooves 3 and the second inclined grooves 4 communicates with the crown circumferential groove 7. In this embodiment, the crown circumferential groove 7 enhances drainage performance in the tire circumferential direction, so that wet braking performance is further improved. The embodiment shown in FIG. 8 is substantially the same as the embodiment shown in FIG. 1 except for the above crown circumferential groove 7, and has the above-described configuration.

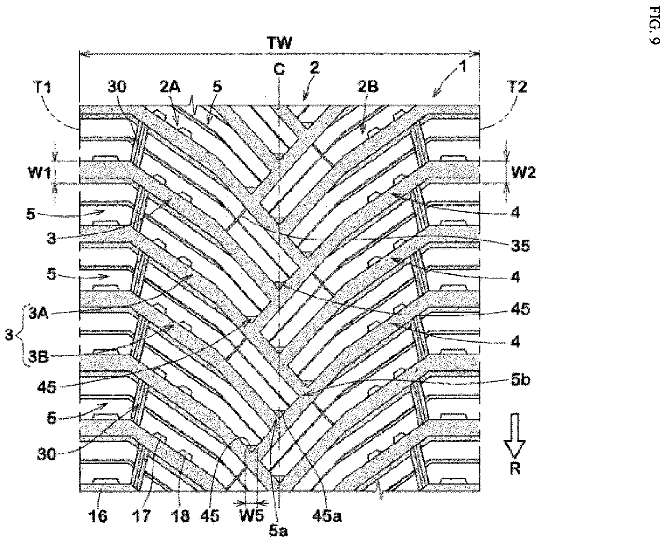

FIG. 9 is a development view of a tread portion 2 of a tire 1 according to another embodiment of the present invention. In this embodiment, the modifications below are made to the tire 1 shown in FIG. 1. As shown in FIG. 9, in this embodiment, each first land portion 5 has a first corner 5a, and the first corner 5a has a chamfered portion 45. The first corner 5a is a corner formed where the first inclined groove 3 is connected to the second inclined groove 4, and is a corner projecting toward one side in the tire circumferential direction (in this embodiment, the leading edge side in the rotation direction R).

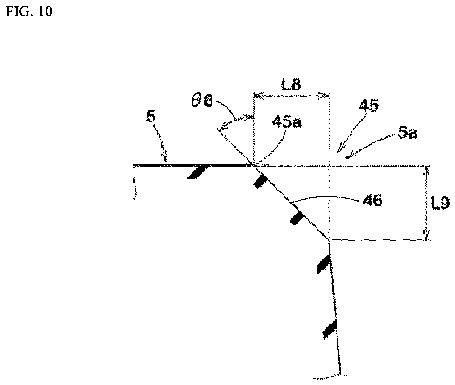

FIG. 10 is an enlarged sectional view of the first corner 5a having the chamfered portion 45. As shown in FIG. 10, the chamfered portion 45 of the first corner 5a has an inclined surface 46 inclined at an angle θ6 of 30 to 50° relative to a line normal to the tire. With the chamfered portion 45, uneven wear of the first land portion 5 can be effectively suppressed. In addition, since such a chamfered portion 45 is formed at the first corner 5a, the inclined surface 46 is bought into contact with the ground during braking, so that a substantial ground-contact area is increased. Thus, braking performance on a dry road surface and a wet road surface can be enhanced.

As shown in FIG. 9, the maximum width W5 in the tire axial direction of the chamfered portion 45 is, for example, 3 to 5 mm. The angle, relative to the tire circumferential direction, of a ridge 45a formed by the tread surface 5s of the first land portion 5 and the inclined surface 46 of the chamfered portion 45 (shown in FIG. 10) is, for example, 80 to 90°. As shown in FIG. 10, a length L8 in the tire circumferential direction of the inclined surface 46 of the chamfered portion 45 is 3 to 5 mm. A length L9 in the tire radial direction of the inclined surface 46 of the chamfered portion 45 is not greater than 50% of the maximum depth d1 of the first inclined groove 3. With such a chamfered portion 45, the above-described effect can be exhibited while the rubber volume of the first land portion 5 is maintained.

As shown in FIG. 9, a second corner 5b of each first land portion 5 of this embodiment does not have the above-described chamfered portion. The second corner 5b is a corner formed where the first inclined groove 3 is connected to the second inclined groove 4, and is a corner projecting toward the second tread end T2 side. Accordingly, the second corner 5b can provide a large frictional force in the tire axial direction, so that excellent cornering performance can be exhibited on a dry road surface and a wet road surface.

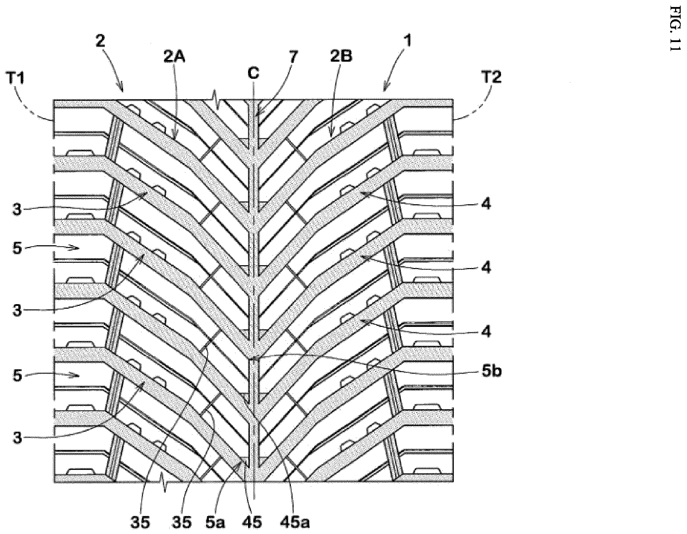

FIG. 11 is a development view of a tread portion 2 of a tire 1 according to another embodiment of the present invention. In this embodiment, the above-described chamfered portion 45 is added to each first land portion 5 of the tire 1 shown in FIG. 8. Also, in this embodiment, the above-described effect can be obtained with the chamfered portion 45.

Although the tire according to the embodiments of the present invention has been described in detail above, the present invention is not limited to the above specific embodiments, and various modifications can be made to implement the present invention.

### EXAMPLES

As an example, a pneumatic tire with a size of 205/55R16 having the basic pattern in FIG. 1 was produced as a test tire. As a comparative example, a tire including the through sipes that were each composed of only the sipe body extending with a uniform width and have no widened portion was produced as a test tire. These test tires have substantially the same configuration except for the above-described matters. Each test tire was tested (when the tire was new and when the tire was 20% worn) for drainage performance on a wet road surface and wet braking performance. The common specifications and the test methods for the test tires are as follows.
Rim to which the tire was mounted: 16×6.5
Tire internal pressure: 250 kPa for all wheels
Test vehicle: a front-wheel-drive car having an engine displacement of 2000 cc
Tire mounted position: all wheels

### <Drainage performance on wet road surface>

The test vehicle was caused to run on a wet road surface, and the speed at which a hydroplaning phenomenon occurred was measured. Regarding the result, the speed is indicated as an index. A higher value indicates that drainage performance on a wet road surface is better.

### <Wet braking performance>

The test vehicle was caused to rapidly brake on a wet road surface, and the braking distance was measured. Regarding the result, the reciprocal of the braking distance is indicated as an index. A higher value indicates that wet braking performance is better.

The test results are shown in Table 1.

**[Table 1]**

| | Comparative example | Example |
|---|---|---|
| Presence/absence of widened portion in through sipe | Absence | Presence |
| Drainage performance of new tire on wet road surface | 100 | 103 |
| Wet braking performance of new tire | 100 | 103 |
| Drainage performance of tire in 20% worn state on wet road surface | 94 | 100 |
| Wet braking performance of tire in 20% worn state | 97 | 100 |

As shown in Table 1, according to the results of the tests, it is confirmed that the tire of the example has improved drainage performance on a wet road surface and wet braking performance compared to the tire of the comparative example, by three points. In addition, it is confirmed that the tire of the example can maintain drainage performance on a wet road surface and wet braking performance even when the tread portion is 20% worn.

## Claims

1. A tire (1) comprising a tread portion (2) having a designated rotation direction (R), wherein
the tread portion (2) includes a first tread end (T1), a plurality of first inclined grooves (3) extending at least from the first tread end (T1) to a portion around a tire equator (C) so as to be inclined toward a leading edge side in the rotation direction (R), and a plurality of first land portions (5) demarcated by the plurality of first inclined grooves (3),
at least one through sipe (35) is provided on at least one of the plurality of first land portions (5) so as to penetrate the first land portion (5) in a tire circumferential direction, and
the through sipe (35) includes a sipe body (36) extending inward in a tire radial direction from a tread surface (5s) of the first land portion (5) and a widened portion (37) connected to an inner side in the tire radial direction of the sipe body (36) and having a greater width than the sipe body (36),
wherein
the tread portion (2) further includes a second tread end (T2), and a plurality of second inclined grooves (4) extending at least from the second tread end (T2) to the portion around the tire equator (C) so as to be inclined toward the leading edge side in the rotation direction (R),
the first inclined grooves (3) communicate with the second inclined grooves (4),
each first land portion (5) has a first corner (5a) projecting toward one side in the tire circumferential direction at a portion where the first inclined groove (3) is connected to the second inclined groove (4), and the first corner (5a) projects toward the leading edge side in the rotation direction (R), **characterized in that**
the first corner (5a) has a chamfered portion (45) including an inclined surface (46) inclined relative to a line normal to the tire (1).

2. The tire (1) according to claim 1, wherein a length (L3) in the tire radial direction of the sipe body (36) is 50% to 80% of a maximum depth (d1) of each of the first inclined grooves (3).

3. The tire (1) according to claim 1 or 2, wherein a maximum width (W4) of the widened portion (37) is 2.5 to 4.0 times a width (W3) of the sipe body (36).

4. The tire (1) according to any one of claims 1 to 3, wherein
each first inclined groove (3) includes an inner groove portion (3c) on the tire equator (C) side, an outer groove portion (3a) on the first tread end (T1) side, and a center groove portion (3b) connected to the inner groove portion (3c) and the outer groove portion (3a), and
the inner groove portion (3c), the outer groove portion (3a), and the center groove portion (3b) linearly extend, and angles thereof relative to the tire circumferential direction are different from each other.

5. The tire (1) according to claim 4, wherein a distance (L1) in a tire axial direction from the tire equator (C) to a junction (41) of the inner groove portion (3c) and the center groove portion (3b) is 10% to 25% of a tread width (TW).

6. The tire (1) according to claim 4 or 5, wherein a distance (L2) in the tire axial direction from the tire equator (C) to a junction (42) of the center groove portion (3b) and the outer groove portion (3a) is 30% to 45% of the tread width (TW).

7. The tire (1) according to any one of claims 4 to 6, wherein one end of the through sipe (35) communicates with the inner groove portion (3c).

8. The tire (1) according to any one of claims 4 to 7, wherein
an angle (θ2) of the center groove portion (3b) relative to the tire axial direction is greater than an angle (θ1) of the outer groove portion (3a) relative to the tire axial direction, and
an angle (θ3) of the inner groove portion (3c) relative to the tire axial direction is greater than the angle (θ2) of the center groove portion (3b) relative to the tire axial direction.

9. The tire (1) according to any one of claims 1 to 8, wherein an angle (θ4) between the through sipe (35) and the first inclined groove (3) communicating with the leading edge side in the rotation direction (R) of the through sipe (35) is 75 to 105°.

10. The tire (1) according to any one of claims 1 to 9, wherein
the tread portion (2) further includes a second tread end (T2), and a plurality of second inclined grooves (4) extending at least from the second tread end (T2) to a portion around the tire equator (C) so as to be inclined toward the leading edge side in the rotation direction (R),
the through sipe (35) is inclined relative to the tire circumferential direction, and
an end portion on the tire equator (C) side of each through sipe (35) is located so as to face an inner end on the tire equator (C) side of each of the plurality of second inclined grooves (4).

11. The tire (1) according to claim 1, wherein
a maximum width (W5) in the tire axial direction of the chamfered portion (45) is 3 to 5 mm,
a length (L8) in the tire circumferential direction of the inclined surface (46) of the chamfered portion (45) is 3 to 5 mm, and
a length (L9) in the tire radial direction of the chamfered portion (45) is not greater than 50% of the maximum depth (d1) of the first inclined groove (3).

12. The tire (1) according to claim 1 or 11, wherein an angle, relative to the tire circumferential direction, of a ridge (45a) formed by the tread surface (5s) of the first land portion (5) and the inclined surface (46) of the chamfered portion (45) is 80 to 90°.

13. The tire (1) according to any one of claims 1, 11and 12, wherein
the first land portion (5) includes a second corner (5b) projecting toward the second tread end (T2) side at a portion where the first inclined groove (3) is connected to the second inclined groove (4), and
the second corner (5b) does not have the chamfered portion (45).

## Patentansprüche

1. Reifen (1), umfassend einen Laufflächenabschnitt (2), welcher eine vorgesehene Rotationsrichtung (R) aufweist, wobei
der Laufflächenabschnitt (2) ein erstes Laufflächenende (T1), eine Mehrzahl erster geneigter Nuten (3), welche sich wenigstens von dem ersten Laufflächenende (T1) zu einem Abschnitt um einen Reifenäquator (C) erstrecken, so dass sie zu einer Vorlaufrandseite in der Rotationsrichtung (R) geneigt sind, und eine Mehrzahl erster Stegabschnitte (5) umfasst, welche durch die Mehrzahl erster geneigter Nuten (3) begrenzt sind,
wenigstens eine Durchgangslamelle (35) auf wenigstens einem der Mehrzahl erster Stegabschnitte (5) vorgesehen ist, so dass sie den ersten Stegabschnitt (5) in einer Reifenumfangsrichtung durchdringt, und
die Durchgangslamelle (35) einen Lamellenkörper (36), welcher von einer Laufflächenoberfläche (5s) des ersten Stegabschnitts (5) in einer Reifenradialrichtung nach innen verläuft, und einen erweiterten Abschnitt (37) umfasst, welcher mit einer Innenseite in der Reifenradialrichtung des Lamellenkörpers (36) verbunden ist und eine größere Breite als der Lamellenkörper (36) aufweist,
wobei
der Laufflächenabschnitt (2) ferner ein zweites Laufflächenende (T2) und eine Mehrzahl zweiter geneigter Nuten (4) umfasst, welche sich wenigstens von dem zweiten Laufflächenende (T2) zu dem Abschnitt um den Reifenäquator (C) erstrecken, so dass sie zu der Vorlaufrandseite in der Rotationsrichtung (R) geneigt sind,
die ersten geneigten Nuten (3) mit den zweiten geneigten Nuten (4) in Verbindung stehen, jeder erste Stegabschnitt (5) eine erste Ecke (5a) aufweist, welche an einem Abschnitt, an welchem die erste geneigte Nut (3) mit der zweiten geneigten Nut (4) verbunden ist, zu einer Seite in der Reifenumfangsrichtung vorsteht, und die erste Ecke (5a) zu der Vorlaufrandseite in der Rotationsrichtung (R) vorsteht,
**dadurch gekennzeichnet, dass**
die erste Ecke (5a) einen abgeschrägten Abschnitt (45) aufweist, welcher eine geneigte Fläche (46) umfasst, welche relativ zu einer Linie geneigt ist, welche normal zu der Reifen (1) ist.

2. Reifen (1) nach Anspruch 1, wobei eine Länge (L3) in der Reifenradialrichtung des Lamellenkörpers (36) 50 % bis 80 % einer maximalen Tiefe (d1) jeder der ersten geneigten Nuten (3) beträgt.

3. Reifen (1) nach Anspruch 1 oder 2, wobei eine maximale Breite (W4) des erweiterten Abschnitts (37) das 2,5- bis 4,0-fache einer Breite (W3) des Lamellenkörpers (36) beträgt.

4. Reifen (1) nach einem der Ansprüche 1 bis 3, wobei
jede erste geneigte Nut (3) einen inneren Nutabschnitt (3c) auf der Seite des Reifenäquators (C), einen äußeren Nutabschnitt (3a) auf der Seite des ersten Laufflächenendes (T1) und einen mittleren Nutabschnitt (3b) umfasst, welcher mit dem inneren Nutabschnitt (3c) und dem äußeren Nutabschnitt (3a) verbunden ist, und
der innere Nutabschnitt (3c), der äußere Nutabschnitt (3a) und der mittlere Nutabschnitt (3b) linear verlaufen und ihre Winkel relativ zu der Reifenumfangsrichtung voneinander verschieden sind.

5. Reifen (1) nach Anspruch 4, wobei ein Abstand (L1) in einer Reifenaxialrichtung von dem Reifenäquator (C) zu einem Verbindungspunkt (41) des inneren Nutabschnitts (3c) und des mittleren Nutabschnitts (3b) 10 % bis 25 % einer Laufflächenbreite (TW) beträgt.

6. Reifen (1) nach Anspruch 4 oder 5, wobei ein Abstand (L2) in der Reifenaxialrichtung von dem Reifenäquator (C) zu einem Verbindungspunkt (42) des mittleren Nutabschnitts (3b) und des äußeren Nutabschnitts (3a) 30 % bis 45 % der Laufflächenbreite (TW) beträgt.

7. Reifen (1) nach einem der Ansprüche 4 bis 6, wobei ein Ende der Durchgangslamelle (35) mit dem inneren Nutabschnitt (3c) in Verbindung steht.

8. Reifen (1) nach einem der Ansprüche 4 bis 7, wobei
ein Winkel (θ2) des mittleren Nutabschnitts (3b) relativ zu der Reifenaxialrichtung größer ist als ein Winkel (θ1) des äußeren Nutabschnitts (3a) relativ zu der Reifenaxialrichtung, und
ein Winkel (θ3) des inneren Nutabschnitts (3c) relativ zu der Reifenaxialrichtung größer ist als der Winkel (θ2) des mittleren Nutabschnitts (3b) relativ zu der Reifenaxialrichtung.

9. Reifen (1) nach einem der Ansprüche 1 bis 8, wobei ein Winkel (θ4) zwischen der Durchgangslamelle (35) und der ersten geneigten Nut (3), welche mit der Vorlaufrandseite in der Rotationsrichtung (R) der Durchgangslamelle (35) in Verbindung steht, 75 bis 105° beträgt.

10. Reifen (1) nach einem der Ansprüche 1 bis 9, wobei
der Laufflächenabschnitt (2) ferner ein zweites Laufflächenende (T2) und eine Mehrzahl zweiter geneigter Nuten (4) umfasst, welche sich wenigstens von dem zweiten Laufflächenende (T2) zu einem Abschnitt um den Reifenäquator (C) erstrecken, so dass sie zu der Vorlaufrandseite in der Rotationsrichtung (R) geneigt sind,
die Durchgangslamelle (35) relativ zu der Reifenumfangsrichtung geneigt ist und
ein Endabschnitt auf der Seite des Reifenäquators (C) jeder Durchgangslamelle (35) angeordnet ist, um einem inneren Ende auf der Seite des Reifenäquators (C) jeder der Mehrzahl zweiter geneigter Nuten (4) zugewandt zu sein.

11. Reifen (1) nach Anspruch 1, wobei
eine maximale Breite (W5) in der Reifenaxialrichtung des abgeschrägten Abschnitts (45) 3 bis 5 mm beträgt,
eine Länge (L8) in der Reifenumfangsrichtung der geneigten Fläche (46) des abgeschrägten Abschnitts (45) 3 bis 5 mm beträgt, und
eine Länge (L9) in der Reifenradialrichtung des abgeschrägten Abschnitts (45) nicht größer als 50 % der maximalen Tiefe (d1) der ersten geneigten Nut (3) ist.

12. Reifen (1) nach Anspruch 1 oder 11, wobei ein Winkel, relativ zu der Reifenumfangsrichtung, einer Kante (45a), welche durch die Laufflächenoberfläche (5s) des ersten Stegabschnitts (5) und die geneigte Fläche (46) des abgeschrägten Abschnitts (45) gebildet ist, 80 bis 90° beträgt.

13. Reifen (1) nach einem der Ansprüche 1, 11 und 12, wobei
der erste Stegabschnitt (5) eine zweite Ecke (5b) umfasst, welche an einem Abschnitt, an welchem die erste geneigte Nut (3) mit der zweiten geneigten Nut (4) verbunden ist, zu der Seite des zweiten Laufflächenendes (T2) vorsteht, und
die zweite Ecke (5b) den abgeschrägten Abschnitt (45) nicht aufweist.

## Revendications

1. Pneu (1) comprenant une partie bande de roulement (2) ayant une direction de rotation (R) désignée, dans lequel
la partie bande de roulement (2) comporte une première extrémité de bande de roulement (T1), une pluralité de premières rainures inclinées (3) s'étendant au moins de la première extrémité de bande de roulement (T1) à une partie autour d'un équateur de pneu (C) de manière à être inclinée vers un côté de bord d'attaque dans la direction de rotation (R), et une pluralité de premières parties de sol (5) délimitées par la pluralité de premières rainures inclinées (3),
au moins une lamelle traversante (35) est prévue sur au moins une parmi la pluralité de premières parties de sol (5) de manière à pénétrer la première partie de sol (5) dans une direction circonférentielle de pneu, et
la lamelle traversante (35) comporte un corps de lamelle (36) s'étendant vers l'intérieur dans une direction radiale de pneu à partir d'une surface de bande de roulement (5s) de la première partie de sol (5) et une partie élargie (37) reliée à un côté intérieur dans la direction radiale de pneu du corps de lamelle (36) et ayant une largeur supérieure au corps de lamelle (36),
dans lequel
la partie bande de roulement (2) comporte en outre une seconde extrémité de bande de roulement (T2), et une pluralité de secondes rainures inclinées (4) s'étendant au moins de la seconde extrémité de bande de roulement (T2) à la partie autour de l'équateur de pneu (C) de manière à être inclinée vers le côté de bord d'attaque dans la direction de rotation (R),
les premières rainures inclinées (3) communiquent avec les secondes rainures inclinées (4),
chaque première partie de sol (5) a un premier coin (5a) faisant saillie vers un côté dans la direction circonférentielle de pneu au niveau d'une partie où la première rainure inclinée (3) est reliée à la seconde rainure inclinée (4), et le premier coin (5a) fait saillie vers le côté de bord d'attaque dans la direction de rotation (R), **caractérisé en ce que**
le premier coin (5a) a une partie chanfreinée (45) comportant une surface inclinée (46) inclinée par rapport à une ligne normale au pneu (1).

2. Pneu (1) selon la revendication 1, dans lequel une longueur (L3) dans la direction radiale de pneu du corps de lamelle (36) est de 50 % à 80 % d'une profondeur maximale (d1) de chacune des premières rainures inclinées (3).

3. Pneu (1) selon la revendication 1 ou 2, dans lequel une largeur maximale (W4) de la partie élargie (37) est de 2,5 à 4,0 fois une largeur (W3) du corps de lamelle (36).

4. Pneu (1) selon l'une quelconque des revendications 1 à 3, dans lequel
chaque première rainure inclinée (3) comporte une partie rainure intérieure (3c) sur le côté d'équateur de pneu (C), une partie rainure extérieure (3a) sur le côté de première extrémité de bande de roulement (T1), et une partie rainure centrale (3b) reliée à la partie rainure intérieure (3c) et à la partie rainure extérieure (3a), et
la partie rainure intérieure (3c), la partie rainure extérieure (3a) et la partie rainure centrale (3b) s'étendent linéairement, et les angles de celles-ci par rapport à la direction circonférentielle de pneu sont différents les uns des autres.

5. Pneu (1) selon la revendication 4, dans lequel une distance (L1) dans une direction axiale de pneu de l'équateur de pneu (C) à une jonction (41) de la partie rainure intérieure (3c) et de la partie rainure centrale (3b) est de 10 % à 25 % d'une largeur de bande de roulement (TW).

6. Pneu (1) selon la revendication 4 ou 5, dans lequel une distance (L2) dans la direction axiale de pneu de l'équateur de pneu (C) à une jonction (42) de la partie rainure centrale (3b) et de la partie rainure extérieure (3a) est de 30 % à 45 % de la largeur de bande de roulement (TW).

7. Pneu (1) selon l'une quelconque des revendications 4 à 6, dans lequel une extrémité de la lamelle traversante (35) communique avec la partie rainure intérieure (3c).

8. Pneu (1) selon l'une quelconque des revendications 4 à 7, dans lequel
un angle (θ2) de la partie rainure centrale (3b) par rapport à la direction axiale de pneu est supérieur à un angle (θ1) de la partie rainure extérieure (3a) par rapport à la direction axiale de pneu, et
un angle (θ3) de la partie rainure intérieure (3c) par rapport à la direction axiale de pneu est supérieur à l'angle (θ2) de la partie rainure centrale (3b) par rapport à la direction axiale de pneu.

9. Pneu (1) selon l'une quelconque des revendications 1 à 8, dans lequel un angle (θ4) entre la lamelle traversante (35) et la première rainure inclinée (3) communiquant avec le côté de bord d'attaque dans la direction de rotation (R) de la lamelle traversante (35) est de 75 à 105°.

10. Pneu (1) selon l'une quelconque des revendications 1 à 9, dans lequel
la partie bande de roulement (2) comporte en outre une seconde extrémité de bande de roulement (T2), et une pluralité de secondes rainures inclinées (4) s'étendant au moins de la seconde extrémité de bande de roulement (T2) à une partie autour de l'équateur de pneu (C) de manière à être inclinées vers le côté de bord d'attaque dans la direction de rotation (R),
la lamelle traversante (35) est inclinée par rapport à la direction circonférentielle de pneu, et
une partie d'extrémité sur le côté d'équateur de pneu (C) de chaque lamelle traversante (35) est située de manière à faire face à une extrémité intérieure sur le côté d'équateur de pneu (C) de chacune de la pluralité de secondes rainures inclinées (4).

11. Pneu (1) selon la revendication 1, dans lequel
une largeur maximale (W5) dans la direction axiale de pneu de la partie chanfreinée (45) est de 3 à 5 mm,
une longueur (L8) dans la direction circonférentielle de pneu de la surface inclinée (46) de la partie chanfreinée (45) est de 3 à 5 mm, et
une longueur (L9) dans la direction radiale de pneu de la partie chanfreinée (45) n'est pas supérieure à 50 % de la profondeur maximale (d1) de la première rainure inclinée (3).

12. Pneu (1) selon la revendication 1 ou 11, dans lequel un angle, par rapport à la direction circonférentielle de pneu, d'une arête (45a) formée par la surface de bande de roulement (5s) de la première partie de sol (5) et la surface inclinée (46) de la partie chanfreinée (45) est de 80 à 90°.

13. Pneu (1) selon l'une quelconque des revendications 1, 11 et 12, dans lequel
la première partie de sol (5) comporte un second coin (5b) faisant saillie vers le côté de seconde extrémité de bande de roulement (T2) au niveau d'une partie où la première rainure inclinée (3) est reliée à la seconde rainure inclinée (4), et
le second coin (5b) n'a pas la partie chanfreinée (45).
